# EUROPÄISCHE PATENTSCHRIFT

(11) **EP 0 949 811 B1**
(45) Veröffentlichungstag und Bekanntmachung des Hinweises auf die Patenterteilung: **24.12.2008**
(21) Anmeldenummer: 99106666.3
(22) Anmeldetag: 01.04.1999
(51) Int. Cl.: H04N 5/445

(54) **Verfahren zur Belegung des Senderspeichers eines Rundfunkempfängers und/oder Datenempfängers**
Method for the assignment of the transmitter memory of a broadcast receiver and/or a data receiver
Méthode pour le remplissage de la mémoire d'émetteurs d' un récepteur radiodiffusion et/ou d' un récepteur de données

(30) Priorität: 09.04.1998 DE 19815952
(43) Veröffentlichungstag der Anmeldung: 13.10.1999
(73) Patentinhaber: Grundig Multimedia B.V., 1083 HJ Amsterdam (NL)
(72) Erfinder: Schramm, Günter, 90762 Fuerth (DE); Braig, Rudolf, 90762 Fuerth (DE); Yavuz, Ziya, 90762 Fuerth (DE)
(74) Vertreter: Pröll, Jürgen

(56) Entgegenhaltungen:
- EP-A- 0 483 463
- US-A- 5 223 924
- US-A- 5 699 125

## Beschreibung

Die Erfindung betrifft ein Verfahren zur Belegung des Senderspeichers eines Rundfunkempfängers und/oder eines Datenempfängers, insbesondere eines Satellitenrundfunkempfänger, und einen Rundfunkempfänger und/oder Datenempfänger, mittels dessen das Verfahren durchführbar ist.

Aus US-A-5223924 ist ein Verfahren zur Belegung des Senderspeichers eines Rundfunkempfängers bekannt. Hierbei wird ein Sendersuchlauf durchgeführt, um eine Sendersuchlauftabelle zu generieren. Anschließend wird die Sendersuchlauftabelle mit einer im Rundfunkempfänger vorhandenen benutzergruppenspezifischen Sendertabelle verglichen und die Daten entsprechend des Vergleichs in einem nichtflüchtigen Speicher gespeichert.

Aus EP-A2-0467108 ist ein Fernsehsignal-Empfangsgerät mit einer einem Suchlauf enthaltenen Programmiereinrichtung bekannt. Das Fernsehsignalempfangsgerät enthält insbesondere in einem Mikrocomputer eine Programmiereinrichtung mit einem Programmierprogramm, mittels dem die Programmiereinrichtung unter Verwendung einer in dem Fernsehsignalempfangsgerät in einem Speicher enthaltenen auslesbaren Namenskürzeltabelle eine Sendertabelle mit den ermittelten Daten der am Empfangsort ausreichend empfangenen Sender von einzelnen Stationen erstellt. Zur Erstellung dieser Tabelle sind im allgemeinen mehrere zeitliche weiter auseinanderliegende Abstimm- oder Suchläufe erforderlich. Eine ebenfalls innerhalb des Programmierprogramms erstellte Stationstabelle dient in Verbindung mit der Senderdatentabelle zur automatischen Abstimmung auf eine ausgewählte Einzelstation und zur Anzeige eines Namenskürzels für diese Einzelstation.

Aus der DE-A1-40 34 493 der Anmelderin ist eine Vorrichtung zur Senderprogrammierung eines Satellitenempfängers bekannt. Dieser weist eine Bedieneinheit, einen Satellitentuner, eine Steuerschaltung und einen Satellitensenderspeicher auf. Zur Vereinfachung der Senderprogrammierung ist der bekannte Satellitenempfänger zusätzlich mit einem Benutzerführungsinformationsspeicher und einem Satellitenparameterspeicher ausgerüstet. Der Satellitenparameterspeicher wird bereits bei der Herstellung des Satellitenempfängers mit Satellitenparametern einer Vielzahl von Satelliten gefüllt. Bei der Senderprogrammierung werden die Parameter sämtlicher Programme eines gewünschten Satelliten auf einem Bildschirm dargestellt. In dieser Darstellung werden die Parameter eines gewünschten Programmes mittels der Bedieneinheit angewählt und durch Betätigung einer Bestätigungstaste der Bedieneinheit in den Satellitensenderspeicher übernommen.

Die Vorteile des bekannten Satellitenempfängers bestehen darin, daß die zur Senderprogrammierung notwendigen Satellitenparameter nicht mühsam einer Fachzeitschrift oder einer Bedienungsanleitung entnommen werden müssen, sondern bereits werksseitig in einem Speicher des Satellitenempfängers abgespeichert werden und dem Benutzer bei der Empfängerprogrammierung zur Auswahl bzw. Übernahme in den Satellitensenderspeicher auf einem Bildschirm zur Verfügung gestellt werden.

In den letzten Jahren hat sich jedoch die Anzahl der über Satellit abgestrahlten Rundfunkprogramme sehr stark vergrößert, so daß die Anzahl der verfügbaren Fernseh- und Radiosender für den Benutzer an die Grenzen des Überschaubaren gestiegen ist. Dies gilt insbesondere auch im Hinblick darauf, daß eine Übertragung von Rundfunkprogrammen zunehmend digital erfolgt. Bei derartigen digitalen Rundfunkübertragungssystemen kommt ein nach dem MPEG-Standard arbeitendes Quellencodierverfahren zum Einsatz. Dieses erlaubt eine Datenkompression, die eine besonders effiziente Übertragung der Daten zuläßt. Beispielsweise war es in der analogen Technik möglich, auf einem Satellitentransponder von 33 MHz Brandbreite ein Fernsehprogramm zu übertragen. Mit der digitalen Technik können hingegen mehrere Programme subjektiv vergleichbarer Qualität auf demselben Transponder übertragen werden.

Ausgehend von diesem Stand der Technik liegt der Erfindung die Aufgabe zugrunde, ein neues Verfahren zur Belegung des Senderspeichers eines Rundfunkempfängers anzugeben, welches der gestiegenen Anzahl der verfügbaren Rundfunksender gerecht wird.

Diese Aufgabe wird durch ein Verfahren mit den in Anspruch 1 angegebenen Merkmalen gelöst. Vorteilhafte Weiterbildungen der Erfindung sind in den abhängigen Verfahrensansprüchen sowie den weiteren Ansprüchen angegeben.

Die Vorteile der Erfindung bestehen insbesondere darin, dass aus der Vielzahl der übertragenen Rundfunkprogramme automatisch eine "persönliche" Sendertabelle erstellt wird, die überschaubar ist und den Sehgewohnheiten eines Durchschnittskonsumenten gerecht wird. Diese persönliche Sendertabelle wird im Satellitensenderspeicher des Empfängers abgespeichert und kann vom Benutzer in beliebiger Weise abgeändert werden, beispielsweise durch eine Vertauschung der Reihenfolge der dort abgespeicherten Sender, durch das Löschen der Daten eines Senders oder durch die Aufnahme der Daten eines weiteren Senders. Außerdem kann der Benutzer die Belegung des Senderspeichers zu einem beliebigen Zeitpunkt durchführen. Beispielsweise kann er die Belegung des Senderspeichers erneuern, wenn er davon Kenntnis erlangt hat, dass neue Sender den Sendebetrieb aufgenommen haben oder dass bestimmte Sender nunmehr über einen anderen Satelliten abgestrahlt werden. Zusätzlich benötigt der Benutzer zur Belegung des Senderspeichers keinerlei Informationen darüber, über welchen Transponder ein bestimmtes Programm abgestrahlt wird und dass der Benutzer die Sender im Speicher in einer Reihenfolge vorfindet, die üblichen Sehgewohnheiten entspricht. Für deutsche Fernsehzuschauer befindet sich beispielsweise im Speicher ARD an erster Stelle, ZDF an zweiter Stelle, usw. Im Weiteren besteht ein Vorteil, dass der Benutzer die Reihenfolge der im Satellitensenderspeicher abgespeicherten Sender an seine individuellen Sehgewohnheiten anpassen kann.

Außerdem wird erreicht, dass die einmal ermittelte Sendersuchlauflabelle erhalten bleibt, so dass der Benutzer zu beliebigen späteren Zeitpunkten auf diese Tabelle zurückgreifen kann, beispielsweise um den Satellitensenderspeicher um die Daten eines weiteren Senders erweitern zu können. Durch die alphabetische Sortierung der in der Sendersuchlauftabelle enthaltenen Sender wird für den Benutzer das Durchsuchen dieser Tabelle nach einem ihm namentlich bekannten Sender erleichtert.

Durch die im Anspruch 4 angegebenen Merkmale wird erreicht, dass die Zeitdauer, die zum Auffinden eines weiteren Senders notwendig ist, verkürzt wird. Voraussetzung dafür ist, dass dem Benutzer zumindest grobe Informationen darüber vorliegen, über welchen Satelliten bzw. Transponder das jeweilige Fernsehprogramm übertragen wird.

Durch die Abspeicherung von Hinweisen bzw. Verweisen, wie sie im Anspruch 5 angegeben sind, wird erreicht, dass die Kapazität des Satellitensenderspeichers vergleichsweise klein sein kann.

Durch die werksseitige Vorgabe einer oder mehrerer benutzerspezifischer Sendertabelle, wird die Senderprogrammierung für den Benutzer weiter vereinfacht.

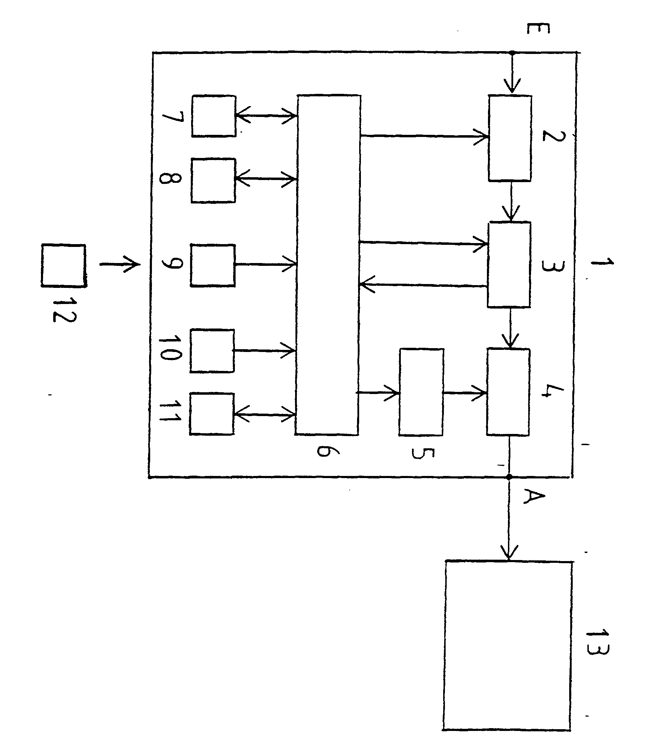

Weitere vorteilhafte Eigenschaften der Erfindung ergeben sich aus der Erläuterung eines Ausführungsbeispiels anhand der Figur. Die Erfindung wird im weiteren beispielhaft anhand eines Satelittenempfängers beschrieben.

Diese zeigt einen Satellitenempfänger, bei dem es sich um eine Set-Top-Box 1 handelt, die zum Empfang von digital übertragenen Satellitenfernsehsignalen vorgesehen ist. In einer weiteren vorteilhaften Ausgestaltung der Erfindung ist die Set-Top-Box durch eine Kabelkopfstation oder ein Sat-Modul in einem TV-Gerät ersetzt. Der Eingangsanschluß E der Set-Top-Box 1 ist mit der Außeneinheit einer Satellitenempfangsanlage verbunden und der Ausgangsanschluß A an ein herkömmliches Fernsehgerät 13 angeschlossen. Der Bildschirm des Fernsehgerätes 13 wird zur Darstellung von Fernsehsignalen verwendet und dient auch zur Anzeige von Menueseiten und Sendertabellen, die insbesondere im Zusammenhang mit der Belegung des Senderspeichers 11 benötigt werden.

Die Set-Top-Box 1 weist weiterhin einen Satellitentuner 2, der auch in Form eines terrestrischen Tuners oder eines Kabeltuners realisiert sein kann, eine Signalverarbeitungsschaltung 3, eine Eintastschaltung 4, einen Textbaustein 5, einen Mikrocomputer 6, einen Benutzerführungsinformationsspeicher 7, einen Suchlaufspeicher 8, einen Fernbedienungsempfänger 9, einen Speicher 10 zur Abspeicherung einer benutzerspezifischen Sendertabelle, einen Senderspeicher 11 und einen Fernbedienungsgeber 12 auf.

Der Benutzerführungsinformationsspeicher 7, in welchem insbesondere Menueseiten abgespeichert sind, und der Speicher 10 zur Abspeicherung einer benutzerspezifischen Sendertabelle sind nichtflüchtige Speicher, die bereits bei der Fertigung der Set-Top-Box 1 im Werk mit Daten versehen werden. Zur Veranschaulichung sind in der Figur diese beiden Speicher getrennt gezeichnet. In der Praxis kann es sich bei diesen beiden Speichern auch um einen einzigen Speicherbaustein handeln, der mehrere Speicherbereiche aufweist.
Bei dem Suchlaufspeicher 8 und dem Senderspeicher 11 handelt es sich vorzugsweise um RAM-Speicher, die erst bei der Belegung des Senderspeichers 11 mit Daten versehen werden und deren Speicherinhalt in Ansprache auf Bedienbefehle veränderbar ist. Zu Veranschaulichung sind in der Figur diese beiden Speicher getrennt gezeichnet. In der Praxis kann es sich bei diesen beiden Speichern auch um einen Speicherbaustein handeln, der mehrere Speicherbereiche aufweist.

Der Mikrocomputer 6 ist zur Steuerung des Satellitentuners 2, der Signalverarbeitungsschaltung 3, der Eintastschaltung 4 und des Textbausteins 5 vorgesehen. Weiterhin dient er bei der Belegung des Senderspeichers 11 als zentrale Steuereinheit, die nach einem in einem ROM abgespeicherten Programm arbeitet.

Im folgenden wird davon ausgegangen, daß dem Mikrocomputer 6 Informationen über Antennenpositionen und LNB-Frequenzen zur Verfügung stehen, die beispielsweise im Rahmen der Antennenkonfiguration ermittelt bzw. eingegeben wurden. Diese Informationen werden vom Mikrocomputer dazu verwendet, um die Satellitenantenne in bekannter Weise zu positionieren und um die LNB-Frequenzen einzustellen.

Die Belegung des Senderspeichers 11 wird durch einen mittels des Fernbedienungsgebers 12 eingegeben Bedienbefehl ausgelöst, der dem Mikrocomputer 6 über den Fernbedienungsempfänger 9 zugeführt wird.

Dabei erfolgt zunächst ein Sendersuchlauf, um eine Sendersuchlauftabelle zu generieren, in welcher Daten aller von einem oder mehreren Satelliten ausgestrahlten Sender enthalten sind. Zu diesem Zweck steuert der Mikrocomputer 6 den Satellitentuner 2 derart an, daß dieser einen vorgegebenen Frequenzbereich nach empfangbaren Signalen absucht. Das Vorliegen empfangbarer Signale wird beispielsweise dadurch überprüft, daß dem Mikrocomputer 6 von der Signalverarbeitungsschaltung 3 Signale zugeführt werden, die im Mikrocomputer auf das Vorliegen vorgegebener Kriterien überprüft werden. Wird vom Mikrocomputer 6 erkannt, daß empfangbare Signale vorliegen, dann werden in der Sendersuchlauftabelle neben der momentane Empfangs- bzw. Transponderfrequenz auch Informationen über die Antennenposition, die Symbolrate, eine FEC-Information, eine Information über die Polarisation, den Sendernamen, die Menge der vom jeweiligen Sender ausgestrahlten Sprachen und eine Kennung, ob dieser Sender verschlüsselt sendet oder nicht, abgespeichert.

Demnach enthält die Sendersuchlauftabelle, die im Speicher 8 abgespeichert wird, Informationen über alle am Empfangsort tatsächlich empfangbaren Satellitensender, insbesondere auch eine Information über die Namen dieser Sender.

Diese Sendersuchlauftabelle wird im nächsten Verfahrensschritt mit einer in der Set-Top-Box 1 bereits werksseitig im Speicher 10 abgespeicherten benutzerspezifischen Sendertabelle verglichen. Diese benutzerspezifische Sendertabelle, die vom Gerätehersteller vorgegeben ist, enthält insbesondere die Namen von Sendern, die in einem bestimmten Land bevorzugt empfangen werden. Diese Namen sind in der Sendertabelle in einer Reihenfolge enthalten, die den üblichen Sehgewohnheiten eines Fernsehkonsumenten entsprechen. Beispielsweise steht für deutsche Fernsehzuschauer an erster Stelle ARD, an zweiter Stelle ZDF, an dritter Stelle RTL, an vierter Stelle SAT1, usw..

Werden bei diesem Vergleich Sender ermittelt, deren Namen sowohl in der Sendersuchlauftabelle als auch in der benutzerspezifischen Sendertabelle enthalten sind, dann werden die diesen Sendern zugehörigen Daten in den Senderspeicher 11 übernommen und dort nicht flüchtig abgespeichert. Alternativ dazu kann im Senderpeicher 11 auch lediglich ein Hinweis auf einen enstprechenden Speicherplatz im Suchlaufspeicher 8 abgespeichert werden, d. h. ein sogenannter Pointer oder Verweis.

Nach Abschluß dieses Vergleichsvorganges sind im Senderspeicher 11 Daten aller Sender abgespeichert, deren Namen sowohl im Suchlaufspeicher 8 als auch im Speicher 10 enthalten sind. Folglich werden dem Benutzer vom Gerätehersteller, der die jeweilige benutzerspezifische Sendertabelle vorgibt, Auswahlkriterien zur Verfügung gestellt, anhand derer aus einer unüberschaubaren Vielzahl von Sendern diejenigen gefiltert werden, die am jeweiligen Empfangsort empfangbar sind und bei denen auch eine vergleichsweise hohe Wahrscheinlichkeit besteht, daß sie der Konsument auch in seiner persönlichen Sendertabelle haben möchte.

Diese persönliche Sendertabelle kann vom Konsumenten durch Eingabe des bereits oben genannten Bedienbefehls immer wieder neu erstellt werden. Damit wird dem Umstand Rechnung getragen, daß insbesondere in der Einführungsphase des digitalen Fernsehens immer mehr neue Fernsehsender den Sendebetrieb aufnehmen, daß bereits bestehende Fernsehsender ihr Programm über einen anderen Satelliten oder einen anderen Transponder desselben Satelliten ausstrahlen, und daß der eine oder andere Sender seinen Sendebetrieb wieder aufgibt. Weiterhin kann vom Konsumenten mittels der Bedieneinheit auch die Reihenfolge der Sender in der persönlichen Sendertabelle verändert werden, um individuelle Sehgewohnheiten besser gerecht zu werden.

Gemäß vorteilhafter Weiterbildungen der Erfindung werden für die im Senderspeicher 11 abzuspeichernden Sender weitere Kriterien vorgegeben, so daß die Anzahl der im Senderspeicher 11 abgespeicherten Sender bei Bedarf reduziert werden kann. Diese Vorgabe weiterer Kriterien, in Form von Filtern, erfolgt durch den Benutzer. Dieser ruft mittels der Bedieneinheit 12 im Speicher 7 abgespeicherte Menueseiten auf, die über den Textbaustein und die Eintastschaltung 4 dem Fernsehempfangsgerät 13 zugeführt und auf dessen Bildschirm dargestellt werden. In diese Menueseiten kann der Benutzer mittels der Bedieneinheit beispielsweise eingeben, daß nur deutschsprachige Sender gewünscht sind, daß nur unverschlüsselte Sender gewünscht sind, daß nur verschlüsselte Sender gewünscht sind, daß nur Sender eines bestimmten Satelliten gewünscht sind, usw.. Die oben genannte Sendersuchlauftabelle wird vorzugsweise in einem nichtflüchtigen Speicher 8 abgelegt, so daß sie auch nach der Belegung des Senderspeichers 11 erhalten bleibt. Dies hat den Vorteil, daß der Benutzer zu einem beliebigen Zeitpunkt auf diese Sendersuchlauftabelle zurückgreifen kann. Wird er beispielsweise durch die Presse auf einen schon lange existierenden Sender aufmerksam, dann kann er sich die Sendersuchlauftabelle auf dem Bildschirm des Fernsehempfängers 13 anzeigen lassen, mittels des Cursors der Bedieneinheit 12 nach dem genannten Sender suchen und durch Betätigung einer Übernahmetaste der Bedieneinheit die Daten dieses Senders in den Senderspeicher 11 übernehmen.

Das Durchsuchen der Sendersuchlauftabelle kann dadurch erleichtert werden, daß die Sender in der Sendersuchlauftabelle alphabetisch angeordnet sind. In diesem Fall kann der jeweils gewünschte Sender unter der Voraussetzung, daß sein Name bekannt ist, in der Tabelle auch dann gezielt gesucht und schnell gefunden werden, wenn die Tabelle sehr lang ist.

Das Auffinden eines weiteren Senders kann gemäß einer vorteilhaften Weiterbildung der Erfindung auch unter Verwendung eines Teilsendersuchlaufes ermittelt werden, der in einem vorgebbaren Frequenzbereich erfolgt. Auch diese Vorgabe des Frequenzbereiches erfolgt durch den Benutzer unter Verwendung einer Menueseite, die auf dem Bildschirm des Fersehempfängers 13 dargestellt wird.

Im Speicher 10 werden vorzugsweise werksseitig mehrere benutzerspezifische Sendertabellen abgespeichert, aus denen der Benutzer dann bei der Einleitung der Belegung des Senderspeichers 11 eine gewünschte auswählt. Auch diese Auswahl kann unter Verwendung von Menueseiten erfolgen, die über den Textbaustein 5 und die Eintastschaltung auf den Bildschirm des Fernsehempfängers 13 dargestellt werden.

In einer weiteren vorteilhaften Ausgestaltung der Erfindung ist vorgesehen, daß der Rundfunkempfänger die persönliche Sendertabelle über die Sendersuchlauftabelle aktuallisiert. Dies wird insbesondere nach jedem neuen Sendersuchlauf erfolgen. Ein Sendersuchlauf wird entweder durch den Benutzer ausgelöst oder aber vom Rundfunkempfänger selbsttätig ausgelöst. Eine selbsttätige Auslösung durch den Rundfunkempfänger erfolgt dann, wenn der Rundfunkempfänger beim Vergleich der persönlichen Sendertabelle und der Sendersuchlauftabelle erkennt, daß Sendefrequenzen in einer der Tabellen gespeichert sind unter welchen kein Rundfunksignal oder Datensignal empfangen wird. Auf diese Weise wird erkannt, wenn sich eine Sendefrequenz eines Senders verändert hat.

In einer weiteren vorteilhaften Ausgestaltung der Erfindung analysiert der Rundfunkempfänder die übertragenen Network-Informationen anhand welchen festgestellt werden kann, ob und welche neuen Sender ausgestahlt werden und ob sich eine Sendefrequenz verändert hat. Liegt dieses vor so führt der Rundfunkempfänger selbsttätig einen Sendersuchlauf durch und erstellt eine neue Sendersuchlauftabelle oder aktuallisiert die vorhandene Sendersuchlauftabelle.
Es ist im weiteren auch möglich, daß einen Sendersuchlauf nach fest definierten Zeitintervallen durchgeführt wird.
Um den Empfang und die Nutzbarkeit des Rundfunkempfängers für den Benutzer nicht zu stören, wird der Sendersuchlauf, der mehrere Minuten in Anspruch nimmt, nur dann ausgeführt, wenn sich der Rundfunkempfänger im Stand-By-Modus befindet.

## Patentansprüche

1. Verfahren zur Belegung des Senderspeichers eines Satellitenrundfunkempfängers, mit den Verfahrensschritten:
Durchführen eines Sendersuchlaufes, um eine Sendersuchlauftabelle zu generieren, in der Daten einer Vielzahl von ausgestrahlten Sendern enthalten sind, wobei diese Sendersuchlauftabelle mit einer im Satellitenrundfunkempfänger abgespeicherten benutzerspezifischen Sendertabelle zur Ermittlung von Sendern, die sowohl der Sendersuchlauftabelle als auch der benutzerspezifischen Sendertabelle angehören, verglichen wird, wobei die benutzerspezifische Sendertabelle vom Hersteller des Satellitenrundfunkempfängers erstellt und bei der Fertigung des Satellitenrundfunkempfängers in einem nichtflüchtigen Speicher des Satellitenrundfunkempfängers abgespeichert wird,
die Abspeicherung der Daten der bei dem Vergleich ermittelten Sender in einem nichtflüchtigen Senderspeicher des Satellitenrundfunkempfängers in einer persönlichen Sendertabelle erfolgt,
und die Sendersuchlauftabelle nach verschiedenen Kriterien sortiert darstellbar ist und das Verfahren mittels der Bedientastatur des Satellitenrundfunkempfängers auslösbar ist, und wobei
beim Vergleichen anhand definierter Filter der Sendersuchlauftabelle mit der im Satellitenrundfunkempfänger abgespeicherten benutzerspezifischen Sendertabelle Sender ermittelt werden, die Audiosignale in einer vorgegebenen Sprache ausstrahlen und beim Vergleichen der Sendersuchlauftabelle mit der im Satellitenrundfunkempfänger abgespeicherten benutzerspezifischen Sendertabelle Sender ermittelt werden, die nicht verschlüsselte Signale ausstrahlen,
und beim Vergleichen der Sendersuchlauftabelle mit der benutzerspezifischen Sendertabelle überprüft wird, ob namensgleiche Sender auftreten und die in der benutzerspezifischen Sendertabelle abgespeicherten Senderdaten in einer den üblichen Sehgewohnheiten entsprechenden Reihenfolge abgespeichert sind und die Reihenfolge der in der persönlichen Sendertabelle abgespeicherten Sendern vom Benutzer veränderbar ist, und wobei
der Satellitenrundfunkempfänger eine Set-Top-Box oder eine Kabelkopfstation oder ein DVB-Gerät oder ein DVB-Nachrüstmodul ist und die Sendersuchlauftabelle in einem nichtflüchtigen Speicher abgespeichert wird und die Sendersuchlauftabelle alphabetisch sortiert auf dem Bildschirm des Satellitenrundfunkempfängers dargestellt wird und die Anwahl eines Senders mittels eines Cursors erfolgt, und wobei
die Senderdaten der persönlichen Sendertabelle nach einem Sendersuchlauf über die Sendersuchlauftabelle aktualisiert werden und
die Sendersuchlauftabelle bei Erkennen einer Veränderung der empfangbaren Sender anhand einer Network-Information mittels eines Sendersuchlaufs aktualisiert wird, wobei der Sendersuchlauf vorgenommen wird, wenn sich der Satellitenrundfunkempfänger im Stand-by-Modus befindet.

2. Verfahren nach Anspruch 1,
**dadurch gekennzeichnet, dass**
in die persönliche Sendertabelle Sender aus der benutzerspezifischen Sendertabelle und der Sendersuchlauftabelle aufgenommen und gelöscht werden können.

3. Verfahren nach einem der Ansprüche 1 oder 2,
die im Rahmen des Sendersuchlaufes ermittelten Sender digitale Signale ausstrahlende Sender sind und die Sender Fernsehsender oder Radiosender sind.

4. Verfahren nach einem oder mehreren der vorhergehenden Ansprüche,
**dadurch gekennzeichnet, dass**
die Daten eines weiteren Senders unter Verwendung eines Teilsendersuchlaufes ermittelt werden, der in einem vorgebbarem Frequenzbereich erfolgt.

5. Verfahren nach einem oder mehreren der vorhergehenden Ansprüche,
**dadurch gekennzeichnet, dass**
im nichtflüchtigen Senderspeicher Daten abgespeichert werden, die Hinweise auf zugehörige Speicherplätze in der Sendersuchlauftabelle enthalten.

## Claims

1. Method of assigning the transmitter memory of a satellite broadcast receiver, with the following method steps:
carrying out a transmitter search run, to generate a transmitter search run table, which contains data of multiple broadcast transmitters,
this transmitter search run table being compared with a user-specific transmitter table which is stored in the satellite broadcast receiver, to determine transmitters which belong to both the transmitter search run table and the user-specific transmitter table,
the user-specific transmitter table being created by the manufacturer of the satellite broadcast receiver, and being stored in a non-volatile memory of the satellite broadcast receiver when the satellite broadcast receiver is produced,
the data of the transmitters which are determined in the comparison being stored in a non-volatile transmitter memory of the satellite broadcast receiver in a personal transmitter table,
and it being possible to present the transmitter search run table sorted according to various criteria, and to initiate the method by means of the operating keypad of the satellite broadcast receiver, and
wherein
in the comparison, on the basis of defined filters, of the transmitter search run table with the user-specific transmitter table which is stored in the satellite broadcast receiver, transmitters which broadcast audio signals in a specified language are determined, and in the comparison of the transmitter search run table with the user-specific transmitter table which is stored in the satellite broadcast receiver, transmitters which broadcast unencrypted signals are determined,
and in the comparison of the transmitter search run table with the user-specific transmitter table, there is a check for whether transmitters with the same name occur and the transmitter data which are stored in the user-specific transmitter table are stored in a sequence corresponding to the usual viewing habits, and the sequence of the transmitters which are stored in the personal transmitter table can be changed by the user, and wherein
the satellite broadcast receiver is a set top box, a cable head station, a DVB device or a DVB retrofit module, the transmitter search run table is stored in a non-volatile memory, the transmitter search run table is presented on the screen of the satellite broadcast receiver sorted alphabetically, and a transmitter is selected by means of a cursor, and wherein
the transmitter data of the personal transmitter table are updated via the transmitter search run table after a transmitter search run, and
if a change of the receivable transmitter is detected on the basis of network information, the transmitter search run table is updated by means of a transmitter search run, the transmitter search run being carried out if the satellite broadcast receiver is in standby mode.

2. Method according to Claim 1,
**characterized in that**
transmitters from the user-specific transmitter table and the transmitter search run table can be received in and deleted from the personal transmitter table.

3. Method according to one of Claims 1 or 2,
**characterized in that**
the transmitters which are determined in the transmitter search run are transmitters which broadcast digital signals, and the transmitters are television or radio transmitters.

4. Method according to one or more of the preceding claims,
**characterized in that**
the data of a further transmitter are determined using a partial transmitter search run, which takes place in a specifiable frequency range.

5. Method according to one or more of the preceding claims,
**characterized in that**
in the non-volatile transmitter memory, data containing pointers to associated storage spaces in the transmitter search run table are stored.

## Revendications

1. Procédé d'affectation de la mémoire d'émetteur d'un récepteur de radiodiffusion par satellite, comportant les étapes consistant à :
effectuer une recherche d'émetteurs, pour générer une table de recherche d'émetteurs, dans laquelle sont contenues les données d'une pluralité d'émetteurs, dans lequel cette table de recherche d'émetteurs est comparée à une table d'émetteurs spécifique à l'utilisateur mémorisée dans un récepteur de radiodiffusion par satellite pour rechercher les émetteurs, qui font partie non seulement de la table de recherche d'émetteurs mais également de la table d'émetteurs spécifique à l'utilisateur, dans lequel la table d'émetteurs spécifique à l'utilisateur est réglée par le fabricant du récepteur de radiodiffusion par satellite et mémorisée dans une mémoire non volatile du récepteur de radiodiffusion par satellite lors de la fabrication du récepteur de radiodiffusion par satellite,
la mémorisation des données de l'émetteur recherché lors de la comparaison est effectuée dans une mémoire non volatile d'émetteur du récepteur de radiodiffusion par satellite dans une table d'émetteurs personnelle,
et la table de recherche d'émetteurs peut être affichée de façon triée selon différents critères et le procédé peut être déclenché au moyen du clavier de la télécommande du récepteur de radiodiffusion par satellite, et dans lequel
lors de la comparaison selon des filtres définis de la table de recherche d'émetteurs avec la table d'émetteurs spécifique à l'utilisateur mémorisée dans le récepteur de radiodiffusion par satellite sont déterminés des émetteurs, qui émettent des signaux audio dans une langue prédéterminée et lors de la comparaison de la table de recherche d'émetteurs avec la table d'émetteurs spécifique à l'utilisateur mémorisée dans le récepteur de radiodiffusion par satellite sont déterminés des émetteurs, qui émettent des signaux non cryptés,
et lors de la comparaison de la table de recherche d'émetteurs avec la table d'émetteurs spécifique à l'utilisateur, il est vérifié s'il existe des émetteurs portant le même nom et si les données d'émetteurs mémorisées dans la table d'émetteurs spécifique à l'utilisateur sont mémorisées en une série correspondant aux habitudes de visionnage usuelles et la série d'émetteurs mémorisés dans la table d'émetteurs personnelle peut être modifiée par l'utilisateur, et dans lequel
le récepteur de radiodiffusion par satellite est un décodeur ou une station de tête ou un appareil DVB ou un module d'équipement DVB et la table de recherche d'émetteurs est mémorisée dans une mémoire non volatile et la table de recherche d'émetteurs est affichée triée par ordre alphabétique sur l'écran du récepteur de radiodiffusion par satellite et la sélection d'un émetteur est effectuée grâce à un curseur, et dans lequel
les données d'émetteurs de la table d'émetteurs personnelle après une recherche d'émetteurs sont actualisées par l'intermédiaire de la table de recherche d'émetteurs et
la table de recherche d'émetteurs est actualisée lors de la reconnaissance d'une modification de l'émetteur pouvant recevoir en regard d'une information de réseau au moyen d'une recherche d'émetteurs, où la recherche d'émetteurs est effectuée, lorsque le récepteur de radiodiffusion par satellite se trouve en mode veille.

2. Procédé selon la revendication 1, **caractérisé en ce que** des émetteurs dans la table d'émetteurs personnelle peuvent être enregistrés et être effacés sur/de la table d'émetteurs spécifique à l'utilisateur et sur/de la table de recherche d'émetteurs.

3. Procédé selon l'une des revendications 1 ou 2, **caractérisé en ce que** les émetteurs déterminés dans le cadre de la recherche d'émetteurs sont des émetteurs émettant des signaux numériques et les émetteurs sont des émetteurs de télévision ou des émetteurs radio.

4. Procédé selon l'une ou plusieurs des revendications précédentes, **caractérisé en ce que** les données d'un autre émetteur sont déterminées lors de l'utilisation d'une recherche d'émetteurs partielle, qui est effectuée dans un domaine de fréquences pouvant être prédéfini.

5. Procédé selon l'une ou plusieurs des revendications précédentes, **caractérisé en ce que** les données, qui contiennent des indications concernant les espaces mémoires associés dans la table de recherche d'émetteurs, sont mémorisées dans la mémoire non volatile d'émetteurs.
